# EUROPÄISCHE PATENTSCHRIFT

(11) **EP 1 361 185 B1**
(45) Veröffentlichungstag und Bekanntmachung des Hinweises auf die Patenterteilung: **05.08.2009**
(21) Anmeldenummer: 03006459.6
(22) Anmeldetag: 21.03.2003
(51) Int. Cl.: B65G 65/46, B65D 88/56

(54) **Vorrichtung zum Zuteilen von fliessfähigen Materialien**
Dispenser for flowable material
Distributeur pour matière fluide

(30) Priorität: 10.05.2002 DE 10220792
(43) Veröffentlichungstag der Anmeldung: 12.11.2003
(73) Patentinhaber: AZO Holding GmbH, 74706 Osterburken (DE)
(72) Erfinder: Baumann, Rudolf, 74706 Osterburken (DE)
(74) Vertreter: Lempert, Jost

(56) Entgegenhaltungen:
- EP-A2- 0 287 708
- WO-A-85/03666
- DE-A- 4 119 354
- DE-A1- 4 215 643
- FR-A1- 2 759 357
- US-A- 3 280 996

## Beschreibung

Die Erfindung betrifft eine Vorrichtung zum dosierten Zuteilen wenigstens einer fließfähigen Materialkomponente, gemäß dem Oberbegriff des Anspruchs 1. Sie ist ferner auf eine Entnahmeeinrichtung für eine solche Vorrichtung sowie eine Behälterwaage mit einer Entnahmeeinrichtung der vorgenannten Art gerichtet.

DE 41 19 354 A1 offenbart eine derartige Vorrichtung sowie eine Entnahmeeinrichtung gemäß dem Oberbegriff des Anspruchs 11.

Bei fließfähigen Materialkomponenten, wie pastösen Materialien, pulver- oder granulatförmigem Schüttgut oder dergleichen, die in Vorratsbehältern bereitgestellt werden, besteht der Bedarf eines dosierten Zuteilens der Komponenten, um sie ihrer bestimmungsgemäßen Verwendung zuzuführen, insbesondere wenn Materialkomponenten entsprechend einer vorgegebenen Rezeptur dosiert und einem Mischer, einer Verarbeitungsmaschine, z.B. einem Extruder, einer Spritzgießmaschine, einer Tablettiermaschine, einer Verpackungsmaschine, einem Förderer oder dergleichen, zugeführt werden sollen.

Um den Massendurchsatz der abgegebenen Materialkomponenten zu erfassen, sind Vorratsbehälter bekannt, die auslaufseitig mit einer Förderschnecke ausgestattet sind (EP 0 344 521). Die Förderschnecke ist motorisch angetrieben und dem Auslauf des z.B. als Silo ausgebildeten Vorratsbehälters nachgeordnet, so daß die Materialkomponente in der gewünschten Menge aus dem Vorratsbehälter entnommen werden kann. Die Dosierung geschieht volumetrisch über die Umdrehungszahl der Förderschnecke oder gravimetrisch, wobei die Materialkomponente in einen Wiegebehälter überführt und die Förderschnecke stillgesetzt wird, sobald die gewünschte Materialmenge im Wiegebehälter erreicht ist. Derartige Anlagen sind jedoch aufgrund des Schneckenantriebs an jedem Vorratsbehälter aufwendig und teuer und insbesondere bei verhältnismäßig kleinvolumigen, portablen Behälter, z.B. für die Zuteilung von Chemikalien, Farbstoffen, pharmazeutischen Wirkstoffen etc. wenig wirtschaftlich.

Ferner sind Entnahmeeinrichtungen mit steuerbar angetriebenen Förderschnecken bekannt (DE 199 41 920), denen die zu dosierenden Materialkomponenten z.B. über einen Aufgabetrichter aufgegeben werden. Die Dosierung geschieht wiederum volumetrisch über die Umdrehungszahl der Schnecke, oder gravimetrisch, indem die Materialkomponente mittels der Schnecke in einen wiegebehälter überführt wird. Nachteilig ist einerseits, daß nach der Dosierung einer Materialkomponente das im Schneckenförderer zurückbleibende Material verworfen werden muß, andererseits kommt es beim Einsatz einer solchen Entnahmeeinrichtung zum dosierten Zuteilen verschiedener Materialkomponenten zu unerwünschten Querkontaminationen im Schneckenförderer.

Der Erfindung liegt die Aufgabe zugrunde, unter Vermeidung der vorgenannten Nachteile eine einfache und kostengünstige Vorrichtung vorzuschlagen.

Erfindungsgemäß wird diese Aufgabe bei einer Vorrichtung nach Anspruch 1 gelöst.

Die erfindungsgemäße Ausgestaltung ermöglicht eine genaue Dosierung der dem jeweiligen Vorratsbehälter zu entnehmenden Materialkomponente, indem die Entnahmeeinrichtung an den Auslauf des Vorratsbehälters angeschlossen und das Kupplungsmittel der Antriebswelle der Entnahmeeinrichtung mit dem Kupplungsmittel der im Bereich des Auslaufs des Vorratsbehälters antriebslos angeordneten Schnecke verbunden wird. Sodann wird die Schnecke über die Antriebswelle mittels des gesteuerten Antriebs der Entnahmeeinrichtung in Drehung versetzt und die Materialkomponente dadurch aus dem Auslauf des Vorratsbehälters über den Einlauf in die Entnahmeeinrichtung überführt. Sobald die gewünschte Menge der Materialkomponente dem Vorratsbehälter entnommen worden ist, wird die Antriebswelle stillgesetzt, von der Schnecke entkuppelt und die Entnahmeeinrichtung vom Auslauf des Vorratsbehälters abgerückt. Die dosierte Zuteilung kann entsprechend dem Stand der Technik volumetrisch durch Steuerung der Umdrehungszahl der mit der Schnecke verbundenen Antriebswelle, gravimetrisch durch einen der Entnahmeeinrichtung nachgeschalteten Wiegebehälter oder auf beliebige andere bekannte Art, z.B. optisch, kapazitiv oder dergleichen, geschehen. Da die Schnecke im wesentlichen im Auslauf des Vorratsbehälters verbleibt oder bei der Materialentnahme auch geringfügig aus diesem ausgezogen werden kann, kann das gesamte entnommene Material unter Vermeidung von Querkontaminationen seinem Verwendungszweck zugeführt werden. Die antriebslose Anordnung der Schnecke im Bereich des Auslaufs des Vorratsbehälters ermöglicht eine im Vergleich mit Vorratsbehältern mit einem nachgeschalteten motorischen Schneckenförderer überaus kostengünstige Herstellung desselben, so daß der Vorratsbehälter z.B. als portabler Einwegbehälter ausgebildet sein kann. Der Vorratsbehälter kann selbstverständlich auch als stationärer Lagerbehälter oder Silo mit einem an der Behälterunterseite angeordneten Auslauf ausgebildet sein, wobei insbesondere mehrere Vorratsbehälter vorgesehen sein können und die Entnahmeeinrichtung zwischen den Ausläufen der Vorratsbehälter verfahrbar sein kann, um die verschiedenen, in den Vorratsbehältern bereitgehaltenen Materialkomponenten in der gewünschten Menge zu entnehmen. Die erfindungsgemäße Vorrichtung ist insbesondere zum chargenweise sequentiellen Zuführen von in mehreren Vorratsbehältern bereitgestellten, verschiedenen Materialkomponenten, z.B. Kunststoffgranulaten, Additiven Farbstoffen, pharmazeutischen Werkstoffen etc., die einem Mischer oder einer Verarbeitungsmaschine entsprechend einer vorgegebenen Rezeptur aufgegeben werden sollen, geeignet.

Erfindugsgemäß ist vorgesehen, daß die Schnecke an ihrem auslaufseitigen Ende ein den Auslauf des Vorratsbehälters innenseitig abdichtendes Verschlußstück aufweist und die Antriebswelle der Entnahmeeinrichtung axial verschiebbar ist, so daß das Verschlußstück nach Verbinden der Antriebswelle mit der Schnecke durch axiales Abrücken der Antriebswelle von dem Auslauf des Vorratsbehälters entfernbar und in.diesen wieder einsetzbar ist. Somit wird die Antriebswelle nach Verbinden ihres Kupplungsmittels mit dem Kupplungsmittel der im Vorratsbehälter angeordneten Schnecke geringfügig vom Auslauf des Vorratsbehälters weg axial verschoben, so daß das mit der Schnecke verbundene Verschlußstück den Auslauf des Vorratsbehälters freigibt. Anschließend wird die Schnecke über die Antriebswelle mittels des gesteuerten Antriebs der Entnahmeeinrichtung rotiert und die Materialkomponente somit aus dem Vorratsbehälter in die Entnahmeeinrichtung überführt. Sobald die gewünschte Menge der Materialkomponente dem Vorratsbehälter entnommen worden ist, wird die Antriebswelle angehalten und axial in Richtung des Auslaufs des Vorratsbehälters bewegt, bis das mit der Schnecke verbundene Verschlußstück den Auslauf des Vorratsbehälters innenseitig abdichtet und diesen dadurch verschließt. Sodann werden die Kupplungsmittel der Antriebswelle und der Schnecke gelöst und die Entnahmeeinrichtung vom Auslauf des Vorratsbehälters getrennt. Eine solche Ausführung ist insbesondere dann vorteilhaft, wenn im Vorratsbehälter luft- und/oder feuchtigkeitsempfindliche Materialkomponenten gelagert sind, so daß weder das entnommene noch das im Vorratsbehälter zurückbleibende Material mit der Umgebung in Kontakt tritt.

Ferner kann die Antriebswelle der Entnahmeeinrichtung an ihrem einlaüfseitigen Ende ein Verschlußstück aufweisen, welches den Einlauf innenseitig abdichtet und nach axialem Verschieben der Antriebswelle den Einlauf der Entnahmeeinrichtung freigibt. Das Verschlußstück der Antriebswelle liegt nach dem Verbinden der Kupplungsmittel von Antriebswelle und Schnecke zweckmäßig dem Verschlußstück der Schnecke an, um ein Ansammeln des aus dem Vorratsbehälter entnommenen Materials zwischen dem Verschlußstück der Schnecke und dem Verschlußstück der Antriebswelle zu verhindern. In einer weiterhin vorteilhaften Ausführung ist vorgehen, daß das Verschlußstück am Einlauf der Entnahmeeinrichtung nach dem Kuppeln der Antriebswelle mit der Schnecke zusammen mit der Schnecke und deren Verschlußstück beim Abrücken der Antriebswelle in den Behälter der Entnahmeeinrichtung verschiebbar ist und die Schnecke in den Einlauf des Behälters der Entnahmeeinrichtung hineinragt.

In bevorzugter Ausführung ist vorgesehen, daß der Auslauf des Vorratsbehälters einen zumindest das auslaufseitige Ende der Schnecke aufnehmenden Auslaufstutzen aufweist und der Einlauf der Entnahmeeinrichtung auf den Auslaufstutzen aufsteckbar ist. Derart ist die Entnahmeeinrichtung auf einfache Weise an den Auslauf des Vorratsbehälters anschließbar, wobei zum Aufstecken des Einlaufs der Entnahmeeinrichtung auf den Auslaufstutzen des Vorratsbehälters Zentriermittel, wie Fasen oder dergleichen, vorgesehen sein können.

Die Kupplungsmittel zum Verbinden der Antriebswelle der Entnahmeeinrichtung mit der Schnecke des Vorratsbehälters sind bevorzugt jeweils an der Stirnseite der Antriebswelle bzw. der Schnecke angeordnet. Die Kupplungsmittel können von beliebigen bekannten, zueinander komplementären Mitteln, wie Rastverbindungen, Mehrkantprofilen, Schraubengewinden oder dergleichen, gebildet sein, welche eine drehfeste und lösbare Verbindung der Antriebswelle mit der Schnecke gewährleisten. In einer Drehrichtung erfolgt zunächst das Ankuppeln und anschließend das Abrücken der Entnahmeeinrichtung sowie die Übergabe der dosierten Menge in die Entnahmeeinrichtung und das Zurückfahren der Schnecke in den Auslauf, während in der anderen Drehrichtung das Entkuppeln und Zurückfahren der Antriebswelle in den Behälter der Entnahmeeinrichtung geschieht.

Die Entnahmeeinrichtung kann einen motorisch, insbesondere elektromotorisch, gesteuerten Antrieb oder auch einen manuellen Antrieb für die Antriebswelle aufweisen. In einer bevorzugten Ausführung ist vorgesehen, daß die Antriebswelle ein Gehäuse der Entnahmeeinrichtung an dessen dem Einlauf abgewandten Seite durchsetzt und der motorische oder manuelle Antrieb außenseitig des Gehäuses angeordnet ist.

Wie bereits angedeutet, ist die Entnahmeeinrichtung vorzugsweise einer Behälterwaage zugeordnet, so daß die Menge des dem Vorratsbehälter entnommenen Materials gravimetrisch erfaßt werden kann.

Die Erfindung betrifft ferner eine Entnahmeeinrichtung zum dosierten Zuteilen wenigstens einer rieselfähigen Materialkomponente nach Anspruch 11.

Erfindungsgemäß, ist die Antriebswelle axial verschiebbar und weist an ihrem einlaufseitigen Ende ein den Einlauf innenseitig abdichtendes Verschlußstück auf. Das Kupplungsmittel ist zweckmäßig an der Stirnseite der Antriebswelle angeordnet. Der gesteuerte Antrieb kann motorisch, insbesondere elektromotorisch, oder manuell sein. Die Antriebswelle durchsetzt vorzugsweise ein Gehäuse der Entnahmeeinrichtung an dessen dem Einlauf abgewandten Seite, wobei der Antrieb außenseitig des Gehäuses angeordnet ist.

Die Vorteile der Erfindung werden besonders augenfällig bei einer Anlage zum dosierten Zuteilen von in mehreren Vorratsbehältern gelagerten fließfähigen Materialkomponenten mittels einer Entnahmeeinrichtung, wenn sämtlichen Vorratsbehältern oder einer Gruppe von Vorratsbehältern eine fahrbare Entnahmeeinrichtung mit einer Behälterwaage zugeordnet ist. Schließlich betrifft die Erfindung auch eine Behälterwaage, die mit einer Entnahmeeinrichtung der vorgenannten Art ausgestattet ist.

Nachstehend ist die Erfindung anhand eines Ausführungsbeispiels unter Bezugnahme auf die Zeichnung näher erläutert. In der Zeichnung zeigen:
- Fig. 1: eine perspektivische Ansicht eines Vörratsbehälters, teilweise im Schnitt;
- Fig. 2: eine perspektivische Ansicht des an eine Entnahmeeinrichtung angeschlossenen Vorratsbehälters gemäß Fig. 1;
- Fig. 3: einen Detailquerschnitt im Bereich des Auslaufs des Vorratsbehälters und des Einlaufs der Entnahmeeinrichtung vor dem Anschließen derselben an den Vorratsbehälter;
- Fig. 4: einen Querschnitt gemäß Fig. 3 nach Anschließen der Entnahmeeinrichtung an den Vorratsbehälter und Verbinden der Kupplungsmittel und
- Fig. 5: einen Querschnitt gemäß Fig. 3 und 4 während der Materialentnahme.

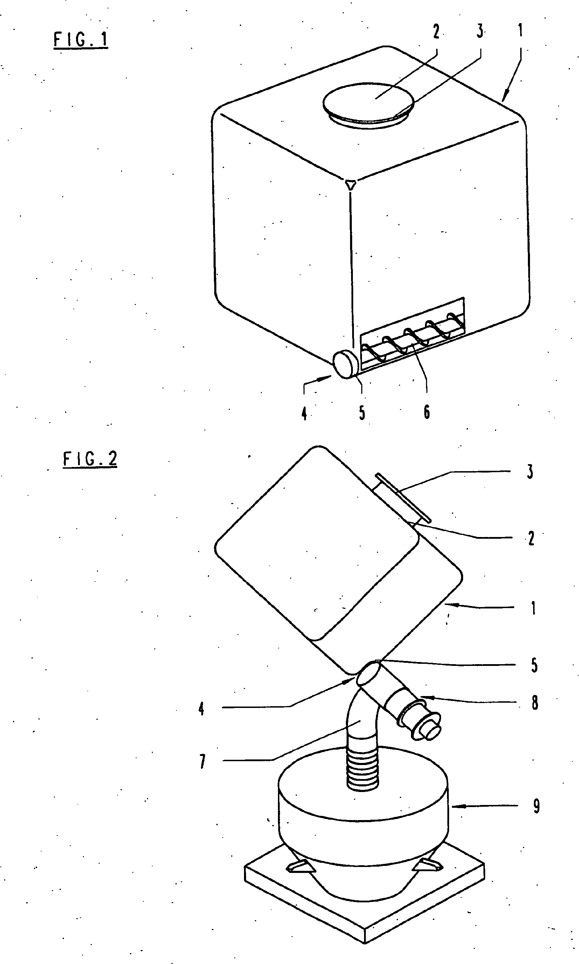

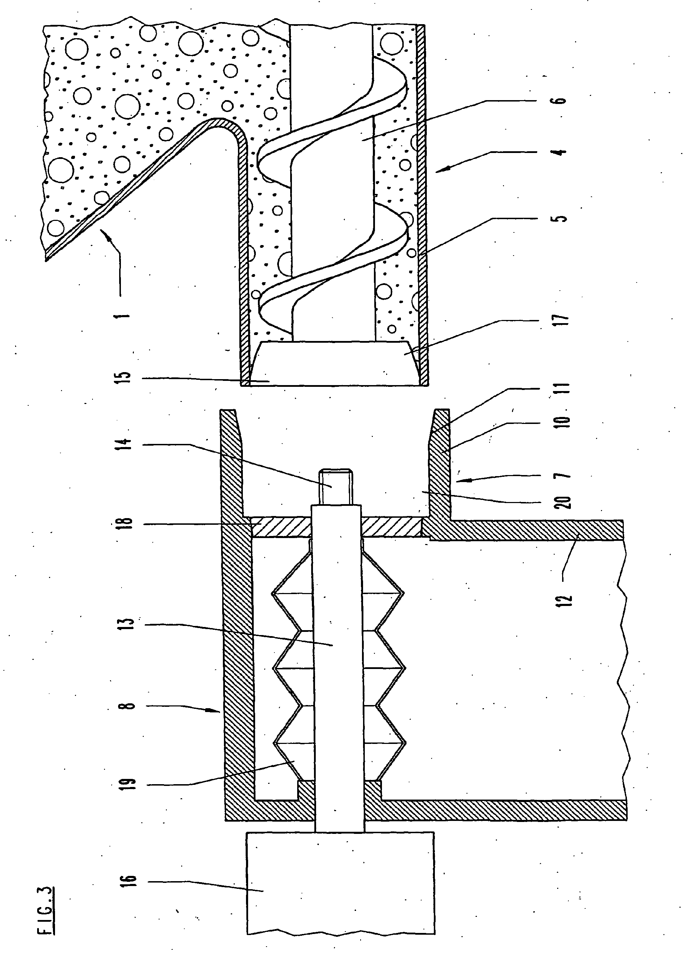

Fig. 1 zeigt eine Ausführungsform eines Vorratsbehälters 1 zur Aufnahme einer fließfähigen, z.B. pastösen oder partikelförmigen Materialkomponente. Der Vorratsbehälter 1 ist beim vorliegenden Ausführungsbeispiel als portabler Transportbehälter ausgebildet, wobei er selbstverständlich auch als stationärer Lagerbehälter, z.B. in Form eines Silos oder dergleichen, ausgebildet sein kann. An seiner Oberseite weist der Vorratsbehälter 1 eine mit einem Deckel 2 verschließbare Füllöffnung 3 auf. Im Bereich der der Füllöffnung 3 abgewandten Unterseite, vorzugsweise an der tiefsten Stelle des Vorratsbehälters 1 ist ein Auslauf 4 für die bevorratete Materialkomponente mit einem seitlich angeformten Auslaufstutzen 5 vorgesehen. Im Bereich des Auslaufs 4 des Vorratsbehälters 1 ist eine antriebslose Schnecke 6 vorgesehen, deren Anordnung und Funktion weiter unten unter Bezugnahme auf Fig. 3 ff näher erläutert ist. Der Vorratsbehälter kann auch einen trichterförmigen Boden auf weisen und die Schnecke 6 am unteren Ende des Trichters angeordnet sein.

In Fig. 2 ist der Vorratsbehälter 1 gemäß Fig. 1 dargestellt, dessen Auslauf 4 an den oberseitigen Einlauf 7 einer Entnahmeeinrichtung 8 angeschlossen ist. Der Entnahmeeinrichtung 8 ist beim vorliegenden Ausführungsbeispiel eine Behälterwaage 9 zur gravimetrischen Bestimmung der aus dem Vorratsbehälter 1 entnommenen Materialkomponente nachgeordnet.

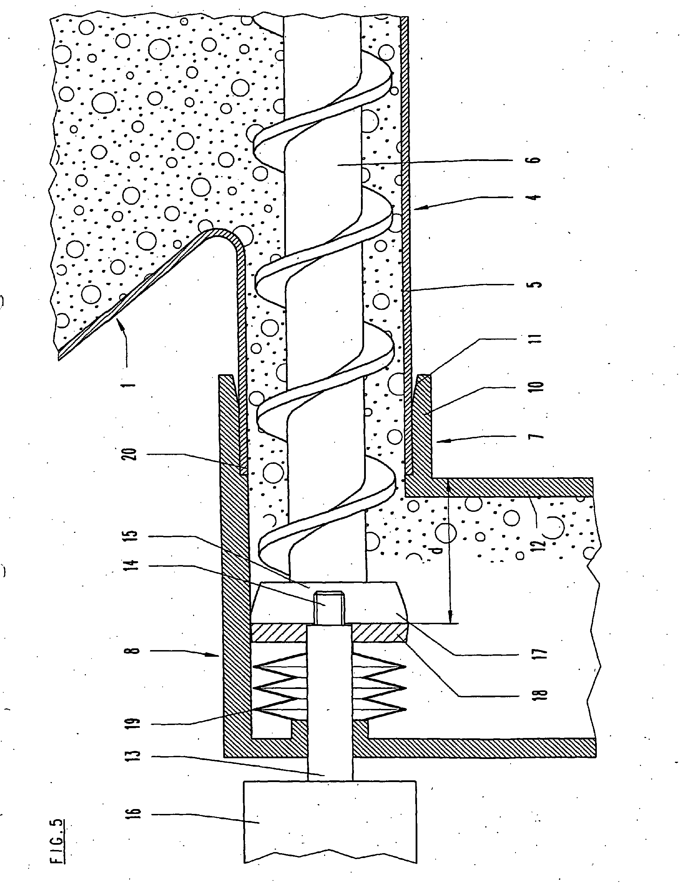

Wie aus Fig. 3 ersichtlich, weist der Einlauf 7 der Entnahmeeinrichtung 8 einen auf den Auslaufstutzen 5 des Auslaufs 4 des Vorratsbehälters 1 aufsteckbaren, rohrförmigen Ansatz 10 auf, der an seinem Ende mit einer innenseitigen Fase 11 versehen ist, um das Aufstecken auf den Auslaufstutzen 5 zu erleichtern. Der Ansatz 10 mündet radial in ein oberseitig verschlossenes Gehäuse 12, das zum Überführen des dem Vorratsbehälter 1 entnommenen Materials (Fig. 5) in den Wiegebehälter 9 (Fig. 2) dient. Die Entnahmeeinrichtung 8 weist eine parallel zum Einlauf 7 angeordnete Antriebswelle 13 auf, die an ihrem freien Ende mit einem stirnseitig angeordneten Kupplungsmittel 15 der Schnecke drehfest verbindbar ist. Das Kupplungsmittel 14 der Antriebswelle 13 ist beim'vorliegenden Ausführungsbeispiel von einem Gewindeansatz gebildet, der in ein Innengewinde des Kupplungsmittels 15 der Schnecke'6 eingreift. Alternativ können beliebige andere Kupplungsmittel vorgesehen sein, welche zur Übertragung eines Drehmomentes von der Antriebswelle 13 auf die Schnecke 6 geeignet sind.

An dem dem Kupplungsmittel 14 abgewandten Ende der Antriebswelle 13, welches das Gehäuse 12 der Entnahmeeinrichtung 8 durchsetzt, ist außenseitig des Gehäuses 12 ein steuerbarer Antrieb 16 vorgesehen. Der Antrieb 16 kann in Form eines manuell betätigbaren Drehknaufs gebildet sein. Alternativ oder zusätzlich kann ein motorischer, z.B. elektromotorischer Antrieb 16 vorgesehen sein, wobei die Antriebswelle 13 in diesem Fall als Abtriebswelle eine Elektromotors ausgebildet oder mit dieser, gegebenenfalls unter Zwischenschaltung eines Getriebes, drehfest verbunden sein kann.

Wie Fig. 3 weiterhin zu entnehmen ist, ist am auslaufseitigen Ende der Schnecke 6 ein den Auslauf 4 des Vorratsbehälters 1 innenseitig abdichtendes Verschlußstück 17 angeordnet, welches fest mit der Schnecke 6 verbunden ist und z.B. einteilig mit dieser ausgebildet sein kann. Das Verschlußstück 17 dient einerseits zum dichten Verschließen des Auslaufs 5, andererseits zum Halten der Schnecke 6 in der in Fig. 3 dargestellten Ruheposition. Entsprechend umfaßt die Antriebswelle 13 der Entnahmeeinrichtung 8 an ihrem freien Ende ein Verschlußstück 18, welches den Einlauf 7 in der Ruheposition (Fig. 3) verschließt, indem es dem Ansatz 9 innenseitig dichtend anliegt.

Die Antriebswelle 13 ist zwischen ihrer in Fig. 3 dargestellten Ruheposition und einer in Fig. 5 dargestellten Betriebsposition um einen Abstand d axial verschiebbar. In gleichem Ausmaß ist die Schnecke 6 im Auslaufstutzen 4 des Behälters 1. Zum Schutz der Antriebswelle 13 vor einem Inkontakttreten mit dem dem Vorratsbehälter 1 entnommenen Material ist ein die Welle 13 umhüllender Balg 19 vorgesehen, der einerseits im Bereich des freien Endes der Antriebswelle 13 an dieser oder dem Verschlußstück 18, andererseits in dem von der Welle 13 durchsetzten Bereich des Gehäuses 12 festgelegt ist.

Nachstehend ist die Funktion der Vorrichtung erläutert.

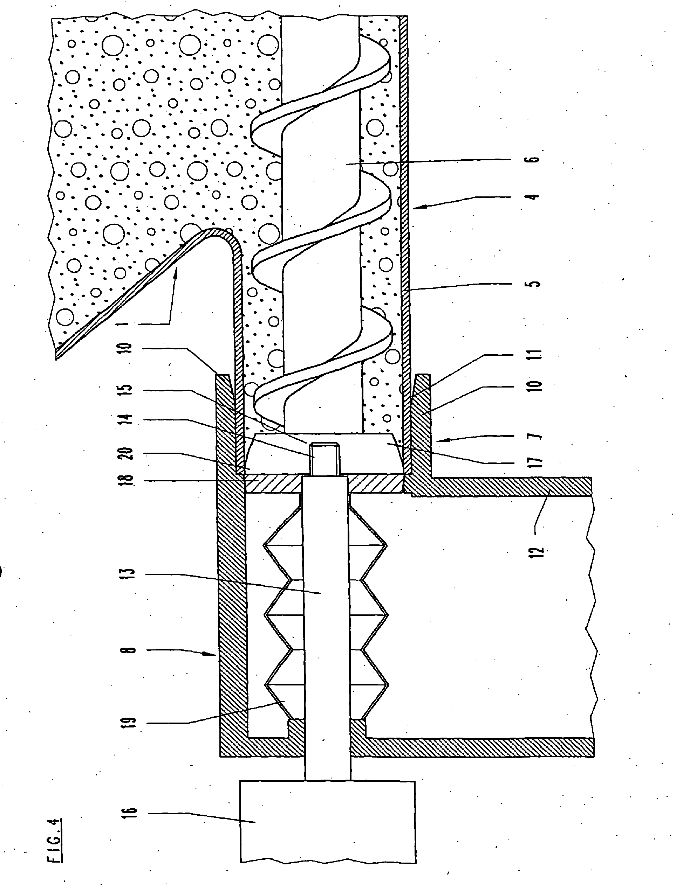

Zum dosierten Zuteilen der im Vorratsbehälter 1 bereitgehaltenen Materialkomponente wird der einlaufseitige Ansatz 10 der Entnahmeeinrichtung 8 auf den Auslaufstutzen 5 des Vorratsbehälters 1 aufgesteckt, wobei der Stutzen 5 stirnseitig an einer als Widerlager dienenden innenseitigen Querschnittsverengung 20 des Ansatzes 10 zur Anlage kommt (Fig. 4). Handelt es sich um einen in Fig. 1 und 2 dargestellten portablen Vorratsbehälter 1, so kann der Einlauf. der Entnahmeeinrichtung 8 manuell mit dem Auslauf 4 des Vorratsbehälters 1 verbunden werden. Handelt es sich um insbesondere großvolumige Vorratsbehälter, z.B. in Form eines Silos, kann die Entnahmeeinrichtung, zusammen mit der Behälterwaage 9 beispielsweise zwischen den in Fig. 1 und 2 dargestellten Relativpositionen bezüglich des Vorratsbehälters 1 verfahrbar sein, wobei insbesondere mehrere Vorratsbehälter vorgesehen sein können und die Entnahmeeinrichtung 8 zusätzlich zwischen den Ausläufen 4 der Vorratsbehälter verfahrbar sein kann, um die verschiedenen, in den Vorratsbehältern bereitgehaltenen Materialkomponenten in der jeweils gewünschten Menge zu entnehmen und z.B. an einen Mischer zu überführen (nicht dargestellt).

Wie aus Fig. 4 ersichtlich, wird das Kupplungsmittel 14 der Antriebswelle 13 nach Anschließen der Entnahmeeinrichtung 8 an den Vorratsbehälter 1 mit dem Kupplungsmittel 15 der Schnecke 6 verbunden, wobei das Verschlußstück 18 der Antriebswelle 13 an dem Verschlußstück 17 der Schnecke 6 zur Anlage kommt. Anschließend wird die Antriebswelle 13 zusammen mit der Schnecke 6 um einen Abstand d axial verschoben, so daß das fest mit der Schnecke 6 verbundene Verschlußstück 17 den Auslauf 4 des Vorratsbehälters 1 freigibt (Fig. 5) und die Schnecke in das Gehäuse der Entnahmeeinrichtung hineinragt. Sodann wird die Antriebswelle 13 mittels des steuerbaren Antriebs 15 rotiert, wobei die Materialkomponente infolge Rotation der Schnecke aus dem Vorratsbehälter 1 in die Entnahmeeinrichtung 8 überführt wird. Die Menge des entnommenen Materials wird z.B. mittels des der Entnahmeeinrichtung nachgeschalteten Behälterwaage 9 (Fig. 2) gravimetrisch bestimmt. Sobald die gewünschte Materialmenge dem Vorratsbehälter entnommen worden ist, wird die Antriebswelle 13 mittels des steuerbaren Antriebs 15 stillgesetzt und in Richtung des Einlaufs 7 um den Abstand d axial verschoben, so daß die Verschlußstücke 17, 18 der Schnecke 6 bzw. der Antriebswelle 13 den Aus lauf 4 des Vorratsbehälters 1 bzw. den Einlauf 7 der Entnahmeeinrichtung 8 verschließen (Fig. 4). Die Kupplungsmittel 14, 15 werden voneinander gelöst, z.B. durch gegensinnigen Umlauf der Antriebswelle und die Entnahmeeinrichtung 8 von dem Vorratsbehälter 1 getrennt.

Die erfindungsgemäße Vorrichtung ist insbesondere zum dosierten Zuteilen von in mehreren Vorratsbehältern 1 bereitgehaltenen, verschiedenen Materialkomponenten in einem vorgegebenen Mischungsverhältnis geeignet, wobei die Vorratsbehälter 1 einen einfachen und kostengünstigen Aufbau aufweisen und Querkontaminationen der Entnahmeeinrichtung 8 zuverlässig vermieden werden.

## Patentansprüche

1. Vorrichtung zum dosierten Zuteilen wenigstens einer fließfähigen Materialkomponente mit wenigstens einem die Materialkomponente aufnehmenden Vorratsbehälter (1) mit einem Auslauf (4) und wenigstens einer Entnahmeeinrichtung (8) mit einem Behälter mit einem Einlauf (7), wobei die Materialkomponente mittels einer Schnecke (6) mit steuerbarem Antrieb (16) chargenweise dem Vorratsbehälter (1) entnehmbar ist, der Vorratsbehälter (1) und die Entnahmeeinrichtung (8) relativ zueinander bewegbar sind und der Auslauf (4) des Vorratsbehälters (1) an den Einlauf (7) der Entnahmeeinrichtung (8) anschließbar ist, wobei die Schnecke (6) im Bereich des Auslaufs (4) des Vorratsbehälters (1) antriebslos, aber drehbar angeordnet ist und ein auslaufseitiges Kupplungsmittel (15) aufweist, und wobei im Bereich des Einlaufs (7) der Entnahmeeinrichtung (8) ein steuerbarer Antrieb (16) angeordnet ist, dessen Antriebswelle (13) ein endständiges, mit dem Kupplungsmittel (15) der Schnecke (6) drehfest verbindbares Kupplungsmittel (14) aufweist, **dadurch gekennzeichnet, daß** die Schnecke (6) an ihrem auslaufseitigen Ende ein den Auslauf (4) des Vorratsbehälters (1) innenseitig abdichtendes Verschlußstück (17) aufweist und die Antriebswelle (13) der Entnahmeeinrichtung (8) axial verschiebbar ist, so daß das Verschlußstück (17) nach Verbinden der Antriebswelle (13) mit der Schnecke (6) durch axiales Abrücken der Antriebswelle (13) von dem Auslauf (4) des Vorratsbehälters (1) lösbar und in diesen wieder einsetzbar ist.

2. Vorrichtung nach Anspruch 1, **dadurch gekennzeichnet, daß** die Antriebswelle (13) an ihrem einlaufseitigen Ende ein den Einlauf (7) der Entnahmeeinrichtung (8) innenseitig abdichtendes Verschlußstück (18) aufweist.

3. Vorrichtung nach Anspruch 2, **dadurch gekennzeichnet, daß** das Verschlußstück (18) am Einlauf (7) der Entnahmeeinrichtung (8) nach dem Kuppeln der Antriebswelle (13) mit der Schnecke (6) zusammen mit der Schnecke und deren Verschlußstück beim Abrücken der Antriebswelle in das Gehäuse der Entnahmeeinrichtung verschiebbar ist und die Schnecke in den Einlauf des Behälters der Entnahmeeinrichtung hineinragt.

4. Vorrichtung nach einem der Ansprüche 1 bis 3, **dadurch gekennzeichnet, daß** der Auslauf (4) des Vorratsbehälters (1) einen zumindest das auslaufseitige Ende der Schnecke (6) aufnehmenden Auslaufstutzen (5) aufweist und der Einlauf (7) der Entnahmeeinrichtung (8) auf den Auslaufstutzen (5) dichtend aufsteckbar ist.

5. Vorrichtung nach einem der Ansprüche 1 bis 4, **dadurch gekennzeichnet, daß** die Kupplungsmittel (14, 15) zum Verbinden der Antriebswelle (13) der Entnahmeeinrichtung (8) mit der Schnecke (6) des Vorratsbehälters (1) jeweils an der Stirnseite der Antriebswelle (13) bzw. der Schnecke (6) angeordnet sind.

6. Vorrichtung nach einem der Ansprüche 1 bis 5, **dadurch gekennzeichnet, daß** die Kupplungsmittel (15) von einem Außengewinde an der Antriebswelle (13) und einem Innengewinde an der Schnecke (6) gebildet sind.

7. Vorrichtung nach einem der Ansprüche 1 bis 6, **dadurch gekennzeichnet, daß** die Antriebswelle (13) motorisch, insbesondere elektromotorisch, gesteuert angetrieben ist.

8. Vorrichtung nach einem der Ansprüche 1 bis 6, **dadurch gekennzeichnet, daß** die Antriebswelle (13) manuell angetrieben ist.

9. Vorrichtung nach einem der Ansprüche 1 bis 8, **dadurch gekennzeichnet, daß** die Antriebswelle (13) ein Gehäuse (12) der Entnahmeeinrichtung (8) an dessen dem Einlauf (7) abgewandten Seite durchsetzt und der Antrieb (16) außenseitig des Gehäuses (12) angeordnet ist.

10. Vorrichtung nach einem der Ansprüche 1 bis 9, **dadurch gekennzeichnet, daß** die Entnahmeeinrichtung (8) einer Behälterwaage (9) zugeordnet ist.

11. Entnahmeeinrichtung (8) zum dosierten Zuteilen wenigstens einer fließfähigen Materialkomponente mit einem Einlauf (7), welcher an den Auslauf (4) eines Vorratsbehälters (1) einer Vorrichtung nach einem der Ansprüche 1 bis 10 anschließbar ist, wobei die Entnahmeeinrichtung (8) einen steuerbaren Antrieb (16) für die Schnecke (6) des Vorratsbehälters (1) mit einer im Bereich des Einlaufs (7) angeordneten Antriebswelle (13) mit einem endständigen, mit dem Kupplungsmittel (15) der Schnecke (6) verbindbaren Kupplungsmittel (14) aufweist, **dadurch gekennzeichnet, daß** die Antriebswelle (13) axial verschiebbar ist und an ihrem einlaufseitigen Ende ein den Einlauf (7) innenseitig abdichtendes Verschlußstück (18) aufweist.

12. Entnahmeeinrichtung nach Anspruch 11, **dadurch gekennzeichnet, daß** das Kupplungsmittel (14) an der Stirnseite der Antriebswelle (13) angeordnet ist.

13. Entnahmeeinrichtung nach Anspruch 11 oder 12, **dadurch gekennzeichnet, daß** sie einen motorischen, insbesondere elektromotorischen, gesteuerten Antrieb (16) für die Antriebswelle (13) aufweist.

14. Entnahmeeinrichtung nach einem der Ansprüche 11 bis 13, **dadurch gekennzeichnet, daß** die einen manuellen Antrieb (16) für die Antriebswelle (13) aufweist.

15. Entnahmeeinrichtung nach einem der Ansprüche 11 bis 14, **dadurch gekennzeichnet, daß** die Antriebswelle (13) ein Gehäuse (12) der Entnahmeeinrichtung (8) an dessen dem Einlauf (7) abgewandten Seite durchsetzt und der Antrieb (16) außenseitig des Gehäuses (12) angeordnet ist.

16. Behälterwaage (9) mit einer Entnahmeeinrichtung (8) nach einem der Ansprüche 11 bis 15.

17. Anlage zum dosierten Zuteilen von in mehreren Vorratsbehältern gelagerten fließfähigen Materialkomponenten mittels einer Entnahmeeinrichtung, **gekennzeichnet durch** eine Vorrichtung nach einem der Ansprüche 1 bis 10, wobei sämtlichen Vorratsbehältern (1) oder einer Gruppe von Vorratsbehältern (1) eine fahrbare Entnahmeeinrichtung (8) mit einer Behälterwaage (9) zugeordnet ist.

## Claims

1. Device for dosed distribution of at least one pourable material component with at least one storage container (1) for acceptance of the material component, the storage container (1) having an outlet (4) and with at least one removal device (8) comprising a container having an inlet (7), wherein the material component can be removed from the storage container (1) in charges by means of a screw (6) having a controllable drive (16), wherein the storage container (1) and the removal device (8) can be moved relative to each other and the outlet (4) of the storage container (1) can be connected to the inlet (7) of the removal device (8), the screw (6) being disposed without a drive mechanism in the vicinity of the outlet (4) of the storage container (1) in such a manner that it can rotate, the screw (6) having a coupling means (15) disposed on a side facing the outlet, wherein a controllable drive (16) is disposed in the region of the inlet (7) of the removal device (8), the drive (16) having a drive shaft (13) whose end comprises a coupling means (14) which can be connected for secure mutual rotation with the coupling means (15) of the screw (6), **characterized in that** the screw (6) has a closing member (17) disposed on an end thereof facing the storage container (1) outlet (4) which seals the inner side of that outlet (4), wherein the drive shaft (13) of the removal device (8) can be displaced in an axial direction such that, following connection between the drive shaft (13) and the screw (6), the closing member (17) can both engage with and be removed from the outlet (4) of the storage container (1).

2. The device according to claim 1, **characterized in that** the drive shaft (13) has a closing member (18) on an end thereof facing the inlet (7) which seals an inner side of the inlet (7) of the removal device (8).

3. The device according to claim 2, **characterized in that** the closing means (18) at the inlet (7) of the removal device (8) can be displaced into the housing of the removal device following coupling of the drive shaft (13) to the screw (6) and together with the screw and its associated closing member in response to displacement of the drive shaft, wherein the screw projects into the inlet of the container of the removal device.

4. The device according to any one of the claims 1 through 3, **characterized in that** the outlet (4) of the storage container (1) has at least one outlet connector (5) which accepts at least the outlet sided end of the screw (6), wherein the inlet (7) of the removal device (8) can be displaced over the outlet connector (5) in a sealing fashion.

5. The device according to any one of the claims 1 through 4, **characterized in that** coupling means (14, 15) are disposed on respective end sides of the drive shaft (13) and the screw (6) for connecting the drive shaft (13) of the removal device (8) to the screw (6) of the storage container (1).

6. The device according to any one of the claims 1 through 5, **characterized in that** the coupling means (15) are formed from an outer thread on the drive shaft (13) and an inner thread on the screw (6).

7. The device according to any one of the claims 1 through 6, **characterized in that** the drive shaft (13) is driven in a controlled fashion by a motor, in particular, by an electro motor.

8. The device according to any one of the claims 1 through 6, **characterized in that** the drive shaft (13) can be driven in a manual manner.

9. The device according to any one of the claims 1 through 8, **characterized in that** the drive shaft (13) penetrates through a housing (12) of the removal device (8) at a side thereof facing away from the inlet (7), wherein the drive (16) is disposed outside of the housing (12).

10. The device according to any one of the claims 1 through 9, **characterized in that** the removal device (8) has an associated container scale (9).

11. Removal device for dosed distribution of at least one pourable material component having an inlet (7) which can be connected to the outlet (4) of a storage container (1) of a device in accordance with any one of the claims 1 through 10, wherein the removal device (8) has a controllable drive (16) for the screw (6) of the storage container (1) with a drive shaft (13) disposed in the region of the inlet (7) and with a coupling means (14) disposed on the end region thereof for connection to coupling means (15) of the screw (6), **characterized in that** the drive shaft (13) can be displaced in an axial direction and has a closing member (18) on an end thereof facing the inlet (7) which seals the inner side of the inlet (7).

12. Removal device according to claim 11, **characterized in that** the coupling means (14) is disposed on the end face of the drive shaft (13).

13. Removal device according to claim 11 or 12, **characterized in that** the device has a motor-controlled drive (16) for the drive shaft (13), in particular, an electro motor.

14. Removal device according to any one of the claims 11 through 13, **characterized in that** the device has a manual drive (16) for the drive shaft (13).

15. Removal device according to any one of the claims 11 through 14, **characterized in that** the drive shaft (13) penetrates through a housing (12) of the removal device (8) on a side thereof facing away from the inlet (7), wherein the drive (16) is disposed outside of the housing (12).

16. Container scale (9) having a removal device (8) according to any one of the claims 11 through 15.

17. Installation for dosed distribution of pourable material components stored in a plurality of storage containers using a removal device, **characterized by** a device according to any one of the claims 1 through 10, wherein all storage containers (1) or a group of storage containers (1) have an associated removal device (8) with a container scale (9).

## Revendications

1. Dispositif pour la distribution dosée d'au moins une composante de matière pouvant s'écouler comprenant au moins un réservoir de stockage (1) recevant la composante de matière présentant une sortie (4) et au moins un dispositif de prélèvement (8) présentant un réservoir avec une entrée (7), la composante de matière pouvant être prélevée du réservoir de stockage (1) de manière discontinue au moyen d'une vis sans fin (6) à entraînement commandable (16), le réservoir de stockage (1) et le dispositif de prélèvement (8) étant mobiles l'un par rapport à l'autre, et la sortie (4) du réservoir de stockage (1) pouvant être raccordée à l'entrée (7) du dispositif de prélèvement (8), la vis sans fin (6) étant disposée libre mais pivotante dans la zone de la sortie (4) du réservoir de stockage (1) et présentant un moyen d'accouplement (15) du côté sortie, un entraînement commandable (16) étant disposé dans la zone de l'entrée (7) du dispositif de prélèvement (8), dont l'arbre d'entraînement (13) présente un moyen d'accouplement (14) terminal relié rigide en torsion au moyen d'accouplement (15) de la vis sans fin (6), **caractérisé en ce que** la vis sans fin (6) présente à son extrémité côté sortie une pièce d'obturation (17) étanche vers l'intérieur qui obture la sortie (4) du réservoir de stockage (1) et **en ce que** l'arbre d'entraînement (13) du dispositif de prélèvement (8) peut coulisser axialement, de sorte que la pièce d'obturation (17) peut, par un retrait axial de l'arbre d'entraînement, être dégagée de la sortie (4) du réservoir de stockage (1) et réintroduite dans celle-ci après mise en prise de l'arbre d'entraînement (13) avec la vis sans fin (6).

2. Dispositif selon la revendication 1, **caractérisé en ce que** l'arbre d'entraînement (13) présente à son extrémité côté entrée une pièce d'obturation (18) étanche vers l'intérieur pour l'entrée (7) du dispositif de prélèvement (8).

3. Dispositif selon la revendication 2,
**caractérisé en ce que** la pièce d'obturation (18) à l'entrée (7) du dispositif de prélèvement (8), après accouplement de l'arbre d'entraînement (13) avec la vis sans fin (6), peut être coulissée, avec la vis sans fin et sa pièce d'obturation, dans le carter du dispositif de prélèvement lors du retrait axial de l'arbre d'entraînement, et **en ce que** la vis sans fin pénètre dans l'entrée du réservoir du dispositif de prélèvement.

4. Dispositif selon l'une quelconque des revendications 1 à 3, **caractérisé en ce que** la sortie (4) du réservoir de stockage (1) présente un manchon de sortie (5) recevant au moins l'extrémité côté sortie de la vis sans fin (6) et **en ce que** l'entrée (7) du dispositif de prélèvement (8) peut être montée étanche sur le manchon de sortie (5).

5. Dispositif selon l'une quelconque des revendications 1 à 4, **caractérisé en ce que** les moyens d'accouplement (14, 15) sont disposés chacun sur la face frontale de l'arbre d'entraînement (13) ou de la vis sans fin (6) pour relier l'arbre d'entraînement (13) du dispositif de prélèvement (8) à la vis sans fin (6) du réservoir de stockage (1).

6. Dispositif selon l'une quelconque des revendications 1 à 5, **caractérisé en ce que** les moyens d'accouplement (15) sont constitués d'un filetage extérieur sur l'arbre d'entraînement (13) et d'un filetage intérieur sur la vis sans fin (6).

7. Dispositif selon l'une quelconque des revendications 1 à 6, **caractérisé en ce que** l'arbre d'entraînement (13) est commandé en entraînement par un moteur, plus particulièrement un moteur électrique.

8. Dispositif selon l'une quelconque des revendications 1 à 6, **caractérisé en ce que** l'arbre d'entraînement (13) est entraîné manuellement.

9. Dispositif selon l'une quelconque des revendications 1 à 8, **caractérisé en ce que** l'arbre d'entraînement (13) pénètre dans un carter (12) du dispositif de prélèvement (8) sur sa face opposée à l'entrée (7) et **en ce que** l'entraînement (16) est disposé à l'extérieur du carter (12).

10. Dispositif selon l'une quelconque des revendications 1 à 9, **caractérisé en ce que** le dispositif de prélèvement (8) est adjoint à une balance de réservoir (9).

11. Dispositif de prélèvement (8) pour la distribution dosée d'au moins une composante de matière pouvant s'écouler comprenant une entrée (7) pouvant être raccordée à la sortie (4) d'un réservoir de stockage (1) d'un dispositif selon l'une quelconque des revendications 1 à 10, le dispositif de prélèvement (8) présentant un entraînement (16) commandable pour la vis sans fin (6) du réservoir de stockage (1) comprenant un arbre d'entraînement (13) disposé dans la zone de l'entrée (7) avec une pièce d'accouplement (14) terminale pouvant être reliée au moyen d'accouplement (15) de la vis sans fin (6), **caractérisé en ce que** l'arbre d'entraînement (13) peut coulisser axialement et **en ce qu'**il présente à son extrémité côté entrée une pièce d'obturation (18) rendant l'entrée (7) étanche vers l'intérieur.

12. Dispositif de prélèvement selon la revendication 11, **caractérisé en ce que** le moyen d'accouplement (14) est disposé sur la face frontale de l'arbre d'entraînement (13).

13. Dispositif de prélèvement selon la revendication 11 ou 12, **caractérisé en ce qu'**il présente un entraînement (16) pour l'arbre d'entraînement (13) commandé par un moteur, plus particulièrement un moteur électrique.

14. Dispositif de prélèvement selon l'une quelconque des revendications 11 à 13, **caractérisé en ce qu'**il présente un entraînement manuel (16) pour l'arbre d'entraînement (13).

15. Dispositif de prélèvement selon l'une quelconque des revendications 11 à 14, **caractérisé en ce que** l'arbre d'entraînement (13) pénètre dans un carter (12) du dispositif de prélèvement (8) sur sa face opposée à l'entrée (7), et **en ce que** l'entraînement (16) est disposé à l'extérieur du carter (12).

16. Balance de réservoir (9) comprenant un dispositif de prélèvement (8) selon l'une quelconque des revendications 11 à 15.

17. Installation pour la distribution dosée de composantes de matière pouvant s'écouler et stockées dans plusieurs réservoirs de stockage au moyen d'un dispositif de prélèvement, **caractérisée par** un dispositif selon l'une quelconque des revendications 1 à 10, dans lequel un dispositif de prélèvement (8) mobile comportant une balance de réservoir (9) est adjoint à l'ensemble des réservoirs de stockage (1) ou à un groupe de réservoirs de stockage (1).
